Europäisches Patentamt

European Patent Office

Office européen des brevets

(11) Publication number: **0 544 005 A1**

# EUROPEAN PATENT APPLICATION
## published in accordance with Art. 158(3) EPC

(21) Application number: **92911105.2**

(22) Date of filing: **16.06.92**

(86) International application number:
**PCT/JP92/00767**

(87) International publication number:
**WO 92/22854 (23.12.92 92/32)**

(51) Int. Cl.⁵: **G03D 13/00**

(30) Priority: **17.06.91 JP 144588/91**
**26.08.91 JP 213433/91**

(43) Date of publication of application:
**02.06.93 Bulletin 93/22**

(84) Designated Contracting States:
**DE FR GB**

(71) Applicant: **SEIKO EPSON CORPORATION**
**4-1, Nishishinjuku 2-chome**
**Shinjuku-ku Tokyo 163(JP)**
Applicant: **SEIKO INSTRUMENTS INC.**
**31-1, Kameido 6-chome Koto-ku**
**Tokyo 136(JP)**
Applicant: **FUJI PHOTO FILM CO., LTD.**
**210 Nakanuma Minamiashigara-shi**
**Kanagawa-ken, 250-01(JP)**

(72) Inventor: **KOBAYASHI, Atsushi, Seiko Epson**
**Corporation**
**3-5, Owa 3-chome Suwa-shi**
**Nagano-ken 392(JP)**
Inventor: **SUZUKI, Takashi, Seiko Epson**
**Corporation**
**3-5, Owa 3-chome Suwa-shi**
**Nagano-ken 392(JP)**

(74) Representative: **Hoffmann, Eckart**
**Patentanwalt Blumbach & Partner**
**Bahnhofstrasse 103**
**W-8032 Gräfelfing (DE)**

(54) **HEAT DEVELOPING APPARATUS.**

(57) A heat developing apparatus which suppresses the occurrence of creases resulting from thermal deformation of a photosensitive member at the time of heat development, makes uniform heating and prevents degradation of image quality due to non-uniform density resulting from non-uniform heating. Arcuate and periodical protuberances are disposed on a heating cylinder (41,241,341,441) of a heat developing apparatus. Alternatively, protuberances at both ends on the periphery of the cylinder, crown-like beadings, or helical protuberances are disposed on the heating cylinders. A nip roller (50) for clamping a photosensitive member (8) with the heating cylinder (541) is disposed near a heating start position. Further-more, the nip roller (50) can select an open state and a clamping state between it and the heating cylinder (541).

FIG. 2

[Technical Field]

This invention concerns a thermal development device for image forming mechanisms that use a thermal development photosensitive member that produces images for mechanisms such as copiers, printers, and facsimile machines. In particular, it concerns a method of reducing the wrinkling of the aforesaid thermal development photosensitive member.

[Background Art]

A large variety of image forming mechanisms and methods are known. Patent number Japanese Laid-Open 62-147461 can be given as a prior-art example of an image forming mechanism that uses a thermal development photosensitive member. Based on this publication, inside of the mechanism the major sections, such as the exposure section, the thermal development section and the pressure transfer section, are formed into one integrated unit. Image formation takes place through steps such as those that follow.

First, the roll-shaped transfer-type thermal development photosensitive member is cut to the designated length. After this, image exposure takes place to form a latent image. Next, thermal development takes place using a heating cylinder. After this, the photosensitive member and the image-receiving paper are placed together and pressure transfer takes place using pressure rollers. The photosensitive member is discharged to the photosensitive member disposal section through a separation mechanism. The image-receiving paper passes through a fixing mechanism and is discharged to a tray through the separation mechanism.

Among the items given above, for thermal development, a part of the heating cylinder peripheral surface rotates by means of an endless belt. During that time, thermal development takes place by placing the photosensitive member between the heating cylinder and the endless belt and making it travel. In addition, this endless belt is always rotating the heating cylinder peripheral surface.

In addition to the endless belt system, which is an example of the prior art, there also are configurations in which generally the photosensitive member is heated while in contact with a heating cylinder. The heating surface in this case is a smooth cylindrical curved surface, which is linear and has no unevenness when viewed at the paper width cross section. The photosensitive member is heated while a cylinder-shaped heating surface rotates. Or, the cylinder remains stationary and the photosensitive member is heated while its back makes [sliding] contact with the heating surface.

However, with the technology of the prior art described above, the problems are that it cannot produce a stable output image concentration and that it cannot easily produce high-quality images in a uniform concentration.

First, using the thermal development method in which the photosensitive member is placed in between the endless belt and the heating cylinder, there is a phenomenon in which the higher the surrounding temperature, the lower the concentration, in spite of the fact that the heating cylinder is maintained at a constant temperature. Another problem is the longer the elapse time after the power is turned on, the lower the concentration. This is due to changes in the thermal development conditions caused by temperature fluctuations, which are caused by the thermal conductance conditions from the surrounding temperature and the heating cylinder. Moreover, the endless belt itself has a complicated configuration. Always maintaining it at a constant temperature means having a very complex and costly mechanism.

However, desired image concentration can be obtained using a simple configuration and low cost if the thermal development device heats by making contact with one surface of the heating cylinder. The reason for this is that during thermal development, the temperature of the photosensitive member can be accurately maintained by not allowing the photosensitive member to contact any component other than the heating cylinder. The temperature of the heating cylinder can be appropriately controlled.

However, using the method described, sometimes unintended concentration unevenness will appear in the images.

That is, in general, it is often the case that the photosensitive member is made of a resin film, such as polyethylene terephthalate, or that it uses paper as a base material. With these, major thermal transformations (expansion or shrinking) take place due to the heating. As a consequence, the photosensitive member gradually wrinkles beginning with the area that makes contact with the heating surface. The wrinkled area rises and is inadequately heated. This results in lack of uniform developing, which causes concentration unevenness on the image and wrinkled paper due to pressure transfer. These greatly deteriorate the image quality.

This invention takes these conditions into consideration and resolves the problems described above. Its objective is to offer a highly reliable thermal development device for image forming mechanisms that allows high-quality images to be obtained simply and at low cost by means of the stable and uniform heating of the photosensitive member.

3

[Disclosure of the Invention]

The thermal development device is characterized by having a rough heating surface or a curved heating surface in the photosensitive member's direction of travel and in the vertical direction. It also is characterized by having linear projections on the heating surface.

In addition, when the inventors of this invention thoroughly studied the cause of the concentration unevenness described above, which are caused by the wrinkling of the photosensitive member, they also discovered that another cause was the instability of the initial contact position in the photosensitive member heating area. As a result, the width of the photosensitive member will vary between the location where contact is made with the heated area of the thermal development device and the location that has not been heated because it has not reached the heated area. When this happens, the width of the photosensitive member will change suddenly at the initial contact position in the heated area of the thermal development device, [a position that is also the boundary]. As a result, the photosensitive member before the heated area, which is floating in air, will become wavy. When the wavy photosensitive member makes contact with the heated area, which is cylindrical in shape, the initial contact position will vary between the peaks and valleys of the waves. This will create a variance in the heating time. Concentration unevenness will be created because unevenness is created by the level of the thermal development. A more severe case is when the wave-forming of the photosensitive member progresses into the heating section, creating areas where no contact is made and no developing takes place, significantly deteriorating the image quality.

For this reason, another configuration of the thermal development device of this invention is a system that heats by making contact with parts of the surface of the photosensitive element, which is mainly the photosensitive member. It features a photosensitive member pinch means that pinches the aforesaid photosensitive member between the aforesaid heating areas in the region of the initial heating position.

It is especially desirable that:
(1) The aforesaid photosensitive member engagement means is an elastic roller.
(2) The aforesaid photosensitive member engagement means applies pressure to the aforesaid heating areas so there is a maximum surface pressure of 5 kilogram per square centimeter or less.

In addition, this system also is characterized by a photosensitive member engagement means that actually engages the aforesaid photosensitive member between the aforesaid heating surfaces at a relative speed of zero at the initial heating position. In this case in particular, a photosensitive member engagement means of hard roller is desired.

Further, this system is characterized by a photosensitive member engagement means that engages the aforesaid photosensitive member on a time-selective basis between the aforesaid heating surfaces at the initial heating position.

Also desired are:
(1) That the aforesaid photosensitive member engagement means does not engage the aforesaid photosensitive member when the aforesaid photosensitive member is not developing.
(2) That when operational malfunction is detected in the image forming step by at least one detection mechanism that detects the designated operation of the image forming step, the aforesaid photosensitive member engagement means will not engage the aforesaid photosensitive member.

[Brief Description of the Drawings]

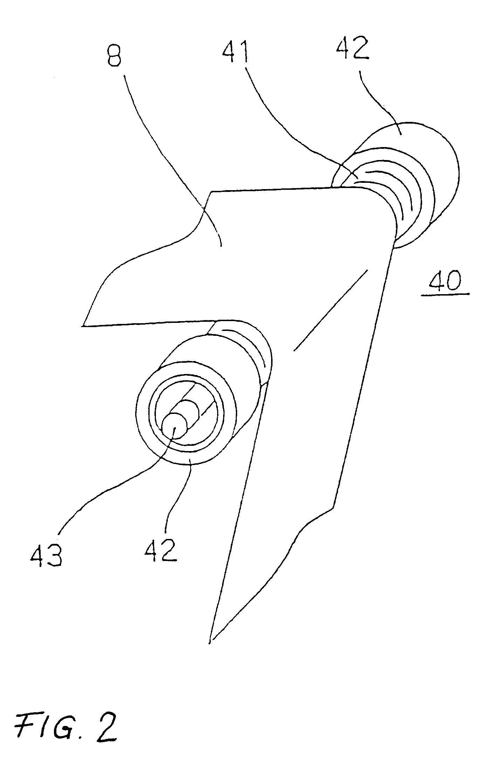

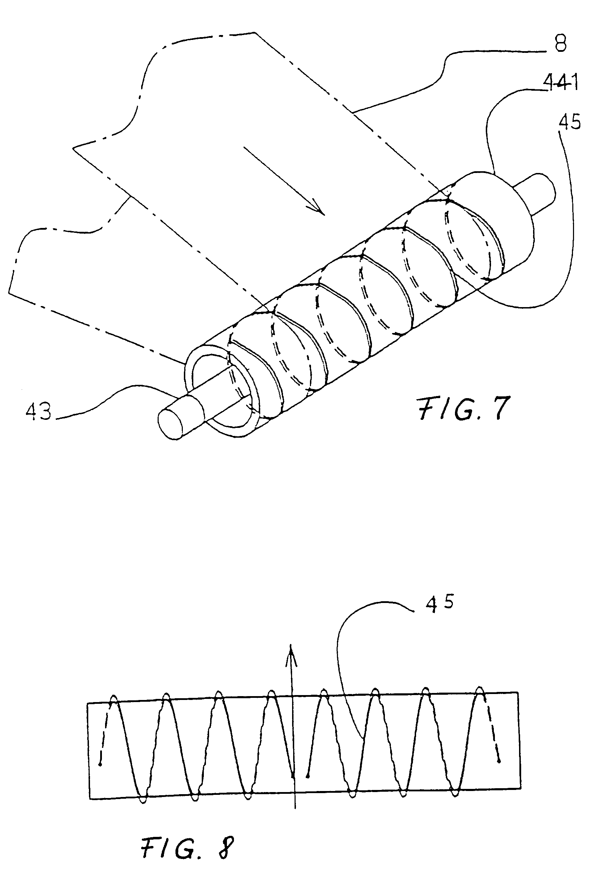

Fig. 1
is a frontal cross section of one example of a copier that uses the thermal development device of this invention.
Fig. 2
is a diagonal view of the first embodiment of the thermal development device of this invention.
Fig. 3
is a cross section of the heating cylinder in Fig. 2.
Figs. 4(a) and 4(b)
are a diagonal view of the wrinkling condition of this invention and that of the prior art.
Figs. 5 and 6
are variations of the first embodiment as shown in Fig. 2.
Fig. 7
is a diagonal view of the second embodiment of the thermal development device of this invention.
Fig. 8
is a top view of a variation of the embodiment shown in Fig. 7.
Fig. 9
is application examples of the embodiment in Fig. 7 or Fig. 8.
Fig. 10
is another variation of the embodiment in Fig. 7 or Fig. 8.
Fig. 11
is an diagonal view of the third embodiment of the thermal development device of this invention.

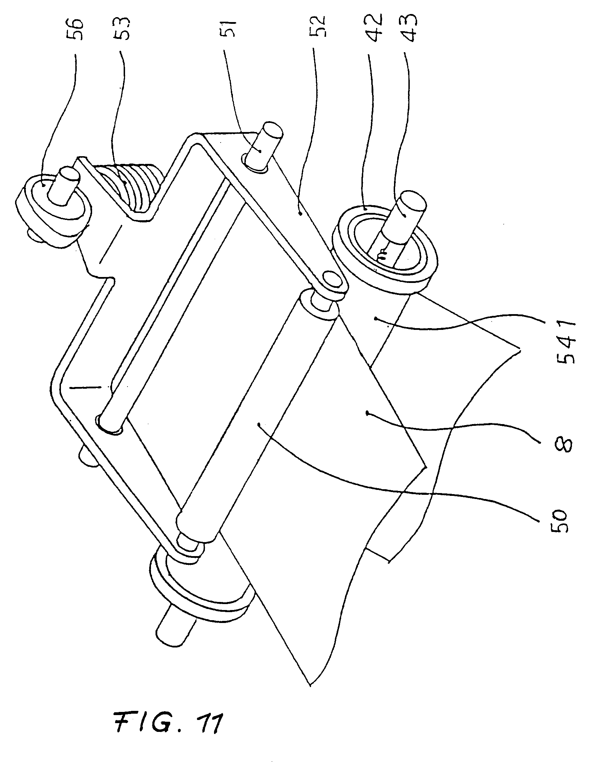

Fig. 12
is a cross section of the nip roller of Fig. 11.
Fig. 13
is a cross section of the positional relationship between the nip roller and the heating cylinder.
Fig. 14
is an angular view of a variation of the embodiment in Fig. 11.
Figs. 15(a) and 15(b)
are cross sectional drawings for explaining the operation of the nip roller.
Fig. 16
is a block diagram showing the malfunction detection system of the image forming mechanism.

Description of Symbols

1.
Document table
2.
Document
3.
Red lamp
4.
Green lamp
5.
Blue lamp
6.
Lens
7.
Exposure table
8.
Photosensitive member
9, 13.
Travel roller
10.
Paper supply tray
11.
Transfer member
12.
Paper feed mechanism
14.
Paper discharge tray
15.
Manual paper supply inlet
16.
Gas filter
20.
Cartridge
21.
Wind-up shaft
40.
Thermal development device
41, 241, 341, 441, 541.
Heating cylinder
42.
Bearing

43.
Halogen lamp heater
44.
Path-length correction roller
45.
Wire
46.
Drive motor
47.
Gears
48.
Heat plate
49.
Surface heating element
50, 150.
Nip roller
51.
Rotating shaft
52.
Lever
53.
Spring
54.
Core shaft
55.
Elastic member
56.
Cam
60.
Pressure transfer mechanism
61.
Upper roller
62.
Middle roller
63.
Lower roller
64.
Separation roller
65.
Pinch roller
141.
Smooth heating cylinder

[Best Mode for Implementing the Invention]

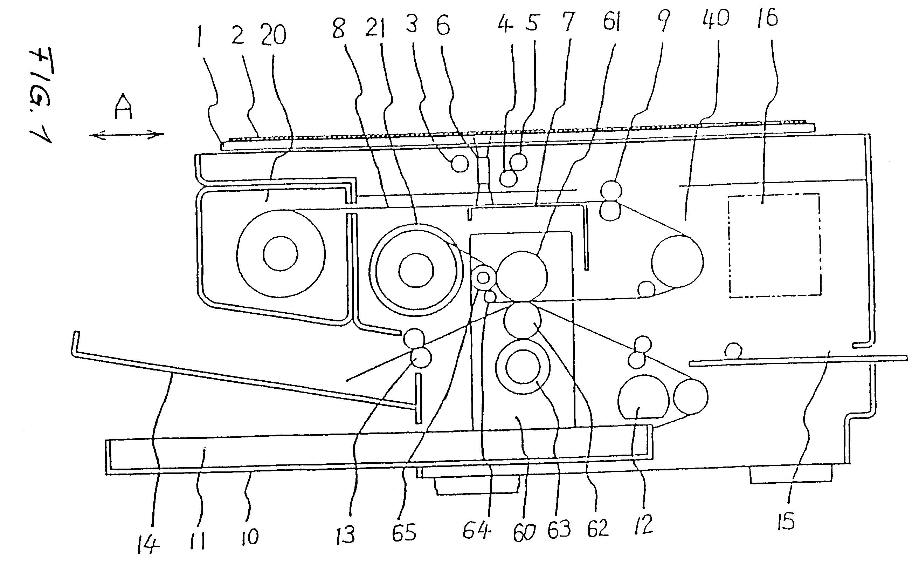

The thermal development device of this invention will be described in detail below according the embodiments. Fig. 1 shows a frontal cross section of one example of an analog copier that uses the thermal development device of this invention. The operation of this machine will be described first.

The machine is configured so that a document 2 is placed on the document table 1, which is such that it can move in the directions of arrow A in the drawing. Light beams that are emitted from a light source, a red lamp 3, a green lamp 4 and a blue lamp 5, illuminate the document 2. At the same time, the reflected light from the document 2 passes through a lens 6 to form an image on the photosensitive member 8, which travels over the exposure table 7. This forms what is called a scanning exposure system.

After a latent image is formed on the exposure table 7, the photosensitive member 8 passes the travel roller 9 and is thermally developed by the thermal development device 40.

The photosensitive member 8 is in the form of a continuous sheet that is feed from a cartridge 20, and the cartridge 20 contains the unexposed photosensitive member 8. The cut-sheet-shaped transfer member 11, which is contained in the paper supply tray 10, is fed out by the paper feed mechanism 12. The cut-sheet-shaped transfer member 11 is placed on top of the photosensitive member 8 at the area where the image is formed. The image is pressure transferred by the pressure transfer mechanism 60 of the roller pressure system. The pressure section of the pressure transfer mechanism 60 is composed of three rollers, an upper roller 61, a middle roller 62 and a lower roller 63. Pressure transfer takes place between the upper roller 61 and the middle roller 62.

After this, the transfer member 11 separates from the photosensitive member 8 by means of the separation roller 64 and is discharged to the discharge tray 14 through the travel roller 13. However, the photosensitive member 8 is wound up at the wind-up shaft 21 through the pinch roller 65, which expedites the travel and separation of the photosensitive member 8.

Number 15 is the manual paper supply inlet. Number 16 is the gas filter for removing the gas produced inside the machine.

The photosensitive member 8 used in this embodiment is like the photosensitive member with thermal development properties described in patent number Japanese Laid-Open 61-278849. In this embodiment, a 30-micron thick polyethylene terephthalate (PET) film is used as a base. Photosensitive micro-capsules that contain a photosensitive material and pigment are applied to this film in a multiple of distributed applications. The thermal expansion coefficient of the PET material just described is from 0.005% to 0.02% per degree centigrade. However, this can be adjusted through the residual strain generated in the manufacturing process and the annealing process for removing the strain.

Next, the thermal development device, which is the feature of this invention, will be described. Fig. 2 shows a diagonal view of the first embodiment of the thermal development device 40 in the image forming mechanism shown in Fig. 1. Its characteristic is that the heating surface is not flat.

In the drawing, a designated amount of the photosensitive member 8 is wound around the heating cylinder 41. The heating cylinder has a heating [circumference] surface. In addition, it is heated by contact with the surface where micro-capsules have not been applied, while applying tension and being made to travel. The heating cylinder 41 is formed of hollow aluminum. Both ends of it are supported to allow rotation by the bearings 42 that are attached to a frame, which is not illustrated. As a consequence, the heating cylinder 41 is such that it rotates along with the travel of the photosensitive member 8. The heating cylinder 41 also has a halogen lamp heater 43 within it. The amount of heat is controlled appropriately by a control mechanism (not illustrated) so that the heating [circumference] surface remains constant at a designated temperature between 120°C and 160°C.

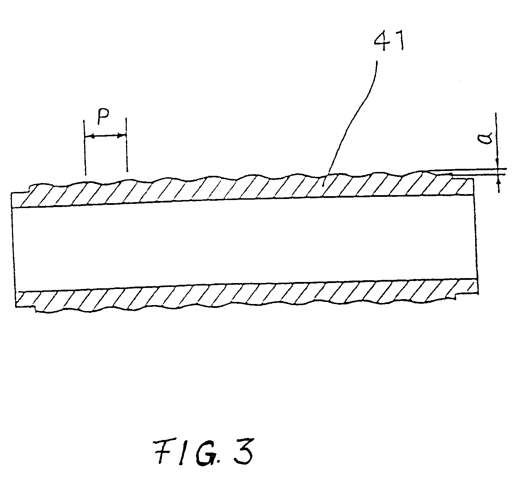

Fig. 3 shows a cross section of the heating cylinder 41. On the cylindrical surface, circular-arc-shaped peaks and valleys with a pitch of P = 20 mm and an amplitude of a = 0.2 mm have been periodically placed. As for the method of producing the peaks and valleys, it is desirable to place them so that they are slightly longer than the width of the photosensitive member after the curvature length has thermally expanded. This length goes along the peaks and valleys on the cross section in the cylindrical axis direction. Experiments have confirmed that if the curvature length along the peaks and valleys is equal to or shorter than the photosensitive member after thermal expansion, wrinkling will occur often when the photosensitive member 8 is heated. Experiments have also confirmed that if the curvature length is too long, it will rise up at the valleys, causing inappropriate heating.

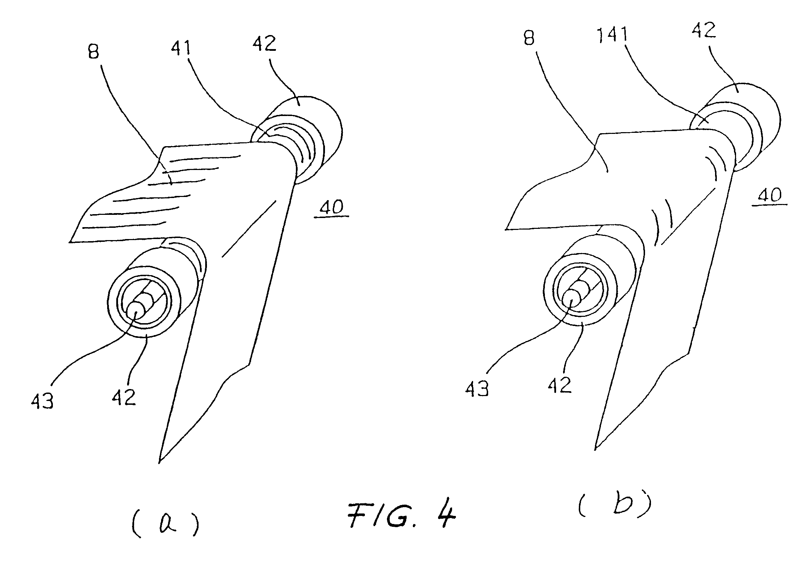

The diagonal drawings in Figs. 4 (a) and (b) show the wrinkle generating conditions when thermal development takes place using the thermal development device 40 of this embodiment and the smooth heating cylinder 141 described in the prior art. In contrast to the wrinkle generation on the smooth heating cylinder 141 of the prior art, the photosensitive member 8 in the thermal development device 40 (Fig. 4 (a)) of this invention is wavy in areas other than the heating cylinder 41. That is, a situation in which the wrinkles resolve the problem of excess length in the horizontally extended photosensitive member 8 is resolved by moving along the peaks and valleys. Moreover, by providing slightly more length to the peaks and valleys provides a force that pulls the photosensitive member 8 more inward than the unheated area, and this provides stable control of the wrinkles.

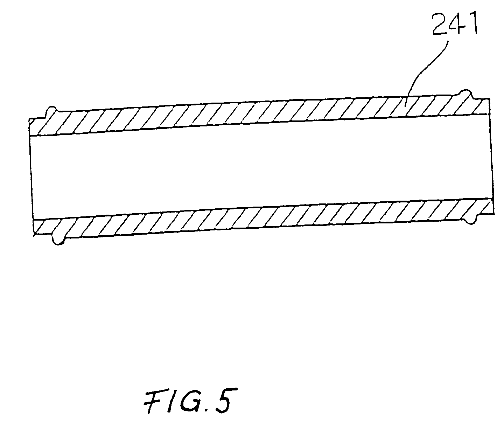

Next, a cross sectional drawing of the heating cylinder 241 in Fig. 5 will be used to describe a variation of the first embodiment of the thermal development device shown in Fig. 2. Except for having differently shaped peaks and valleys on the heating cylinder 241, the composition of this embodiment is the same as the one just described. In the case of the heating cylinder 241 of this embodiment, the area of the photosensitive member 8 image region, which makes contact with the heating cylinder 241, is smooth. In addition, projections have been provided on either end outside of the image region. In the previously described embodiment, small wrinkles may be generated by the condition of tension, etc., because there are peaks and valleys in the image area. However, in this embodiment, the heating cylinder within the image area is smooth. Therefore, there is no deterioration in image quality due to the generation of small wrinkles.

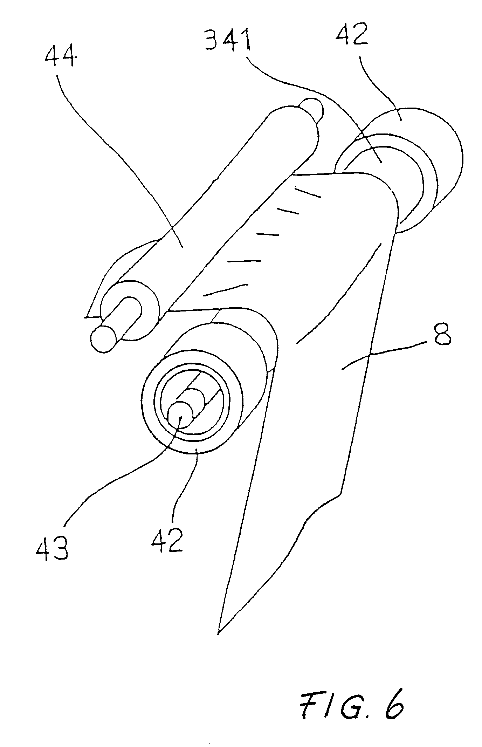

Still another variation of the first embodiment is in Fig. 6, which shows an diagonal view of the embodiment. The diameter of the center section of the heating cylinder 341 has what is called a crown shape, which is a diameter that is larger than the diameter of both ends. Having from 0.5 mm to 4 mm of difference between the diameter of the center section and that of both ends is desired. If it is smaller than 0.5 mm, often wrinkles will form on the photosensitive member 8, just like that which occurred in the prior art. Experiment has confirmed that a difference larger than 4 mm may form wrinkles of a different shape. The path-length correction roller 44, which is supported by bearings (not illustrated) on both ends to allow rotation, has what is called a reverse crown shape. In this cease, the diameter of both ends is larger than that of the center section. Combining both rollers, eliminates the non uniformity of tension by making the path length constant in the photosensitive member 8 direction of travel. Except for the heating cylinder 341 and the path-length correction roller 44, the configuration is the same as that described in the embodiment above. The thermal development device of this embodiment does not cause the small wrinkles in the image region. In contrast to the embodiment shown in Fig. 5, in which the width of the photosensitive member must be wider than that of the image region to a certain degree, this one requires only a slightly wider width.

In the embodiment shown in Fig. 3, distortion is generated in the valley and peak areas because the path length changes in the photosensitive member 8 travel direction. This may show up as concentration unevenness. However, in such a case, this can be avoided by putting the peaks and valleys in a spiral configuration.

All of the embodiments described above are configurations in which heating cylinder receives the static friction force through the travel force of the photosensitive member 8 and is rotated. However, it has been confirmed that the same results can be obtained in a configuration where the photosensitive member 8 slides on the heated surface while the heating cylinder is static. In this case, everything does not necessarily have to be completely cylindrical in shape. A thermal development device with a heating surface that in part uses circular arcs also is acceptable.

Next, the second embodiment of the thermal development device of this invention will be described. Fig. 7 shows diagonal view of the second embodiment of the thermal development device 40 in the image forming mechanism of Fig. 1. In order to create the peaks and valleys on the fixed heating cylinder, wire has been wound around it.

In the drawing, the thermal development device 40 is composed of a heating cylinder 441, a wire 45 wound in a spiral fashion around the heating cylinder 441, and a halogen lamp heater 43, which is for heating. The heating cylinder 441 is fixed in position. It does not rotate. The photosensitive member 8 is heated while it slides across this heating cylinder 441. In this embodiment, the diameter of the heating cylinder 441 is 30 mm. The wire 45 is made of stainless steel that has a diameter of 0.3 mm.

The wire 45 is the feature of this embodiment. Even if the photosensitive member 8 expands thermally in perpendicular angle of its movement direction, that is, in the heating cylinder 441 lengthwise direction, the part that rolls over the wire 45 will absorb that expansion. This will allow the wrinkle generation to be suppressed. In addition, because the wire is wound in a spiral, the part of the photosensitive member 8 that goes across the wire 45 will change with another part, and every part of the photosensitive member 8 will be thermally developed in a uniform manner. Optimal conditions can be gained by changing the wire 45 thickness and the number of windings by means of the photosensitive member 8 base material properties and heating temperature.

Fig. 8 shows a variation of the embodiment in Fig. 7. It is basically the same as the embodiment in Fig. 7. However, the feature here is that the wire is wound from the center and spreads in the direction (the expansion direction) of the outside ends. This is in contrast to the photosensitive member 8 moving in the direction of the arrow. In this way, even if wrinkles start to appear on the photosensitive member 8, they will be naturally pulled to the outside and eliminated. In addition, it is possible to prevent the slanted movement of the photosensitive member 8 because it will have left and right symmetry.

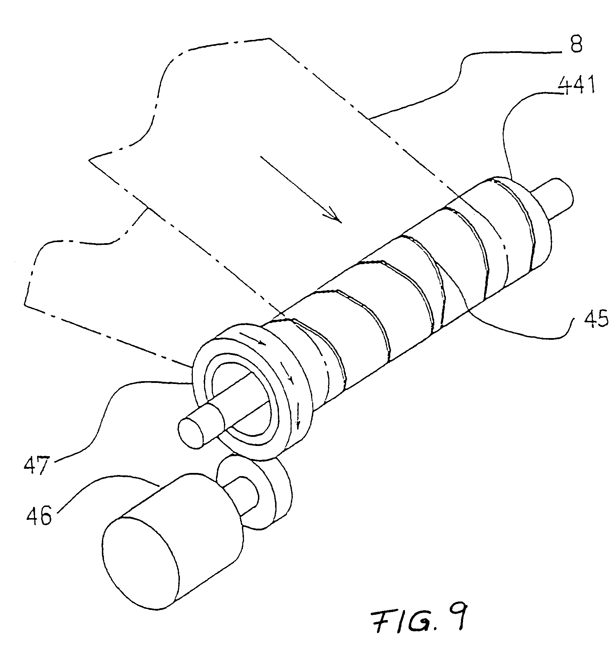

Fig. 9 shows an application example of the embodiment in Fig. 7 or Fig. 8. The composition of Fig. 9 is the same as that shown in Fig. 7 and Fig. 8. However, in this embodiment, the heating cylinder 441 is rotated by a drive motor 46 through gears 47. The direction of rotation is the same as the direction in which the photosensitive member 8 travels. How-ever, the heating cylinder 441 rotating speed is such that its peripheral speed is faster than the photosensitive member 8 travel speed. This functions to spread the photosensitive member 8 toward the outside. Of course, the direction of the wire can be reversed so that it rotates in the direction opposite of the photosensitive member 8 travel direction. Using the configuration of this embodiment, the development unevenness caused by the wire 45 can be avoided because even if the photosensitive member 8 winds around the heating cylinder 441 at a small angle, the total area of the photosensitive member 8 can have an equal amount of time in contact with the wire 45.

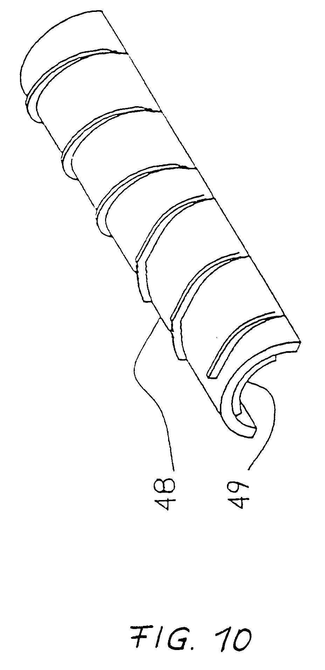

Fig. 10 shows another variation of the embodiment in Fig. 7 and Fig. 8. To gain the same results as those described above, it does not use a wire and a cylinder as described above. It is made as a single unit by aluminum casting or forging, making it a heating plate 48. In addition, in this embodiment, there is no halogen lamp. It uses a surface heating element as its source of heat. By forming this as a single unit, the effect is to improve its durability and eliminate some manufacturing costs. In addition, more uniform development is possible because of an increase in the degree of freedom of the shape.

Next, another method of suppressing the generation of wrinkles will be described. Figs. 11 to 16 are drawings that describe this embodiment (the third embodiment). Different from the first and second embodiments described above, its feature is that it supports the photosensitive member relative to the smooth heating surface.

Fig. 11 shows an diagonal view of the third embodiment of the thermal development device 40 of the image forming mechanism in Fig. 1.

In the drawing, the photosensitive member 8 is pinched with the nip roller 50 and the heating cylinder 541 so that the side with the micro-capsules makes contact with the nip roller 50 at the heating cylinder 541 initial heating position. In addition, in areas other than the initial heating position, [for each designated amount] the photosensitive member 8 will wind onto the heating cylinder 541, which has a heating [circumference] surface, so that the side without the micro-capsules makes contact. The photosensitive member 8 will be contact heated while traveling under tension. The heating cylinder 541 is supported on both ends by bearings 42 to make rotation possible. As a result, the heating cylinder 541 is such that it is rotated by the travel of the photosensitive member 8. Moreover, the heating cylinder 541 has a halogen lamp heater 43 inside of it, which controls the amount of heat so that the temperature of the heating [circumference] surface is constant at a designated temperature of between 120°C and 160°C.

The nip roller 50 is attached to a lever 52 that oscillates and has a center at a rotating shaft 51 which is attached to a frame (not illustrated). This allows the nip roller to rotate. The lever 52 is forced down on the heating cylinder 541 by a spring 53. The spring 53 is attached on one end to the frame (not illustrated) and on the other end to the lever 52.

The structure of the nip roller 50 will be described using the cross sectional drawing in Fig. 12. For the nip roller, an elastic material such as rubber or elastomer is place around a metal core 54. From the perspective of the thermal resistance of the nip roller elastic material, using a material such as silicon rubber, rubber fluoride, ethylene propylene rubber, epichlorohydrine rubber, or butyl rubber is desired. To prevent excess surface pressure on the surface of the photosensitive member, the hardness of the elastic material and with the force of the spring 53 must be considered. Based on the experiments carried out the inventors, if the maximum pressure applied to the photosensitive member exceeds five kilograms per square centimeter, blurring will appear in the low concentration areas of the image. This is believed to be caused by the destruction of micro-capsules before they were hardened. Micro-capsules are intended to harden and not transfer images.

The maximum surface pressure must always be held below a specified value across the entire width of the photosensitive member 8. However, because the nip roller is an elastic roller, the conditions described above can be achieved without depending on the accuracy of the shapes of the nip roller 50 and heating cylinder 541, and without much dependence on the installation accuracy of both components. The reason for this is that irregularities in pressure due to tolerances will be absorbed and made uniform by the function of the elasticity. At a result, cost increases due to the need for more accuracy can be prevented.

The conditions for establishing the maximum surface pressure in the specified values for the elastic roller can be found by the relation expression, which is related to elastic roller contact and expressed in equation 1.

Equation 1      $Pmax = P_L \cdot \sqrt{3E/bDP_L}$

Where:
Pmax is the maximum surface pressure.
$P_L$ is the line pressure (total load/pressure width).
E is the elastic coefficient of the elastic material.
b is the thickness of the rubber.
D is the actual diameter of the roller.

$$1/D = 1/d_1 + 1/d_2$$

Where:

$d_1$ is the diameter of the nip roller.

$d_2$ is the diameter of the heating cylinder.

In this embodiment, the above conditions have been accomplished using a compressed rubber hardness of 80 (JIS A) with a linear pressure of 200 grams per centimeter.

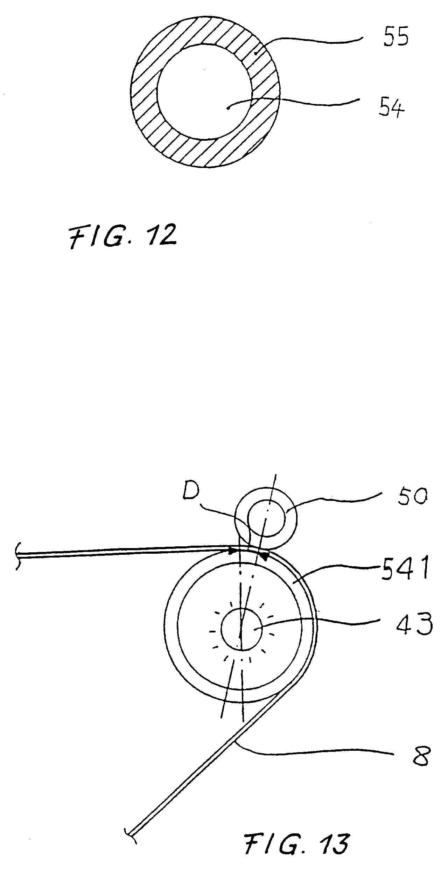

Next, the positioning of the nip roller 50 will be described. Fig. 13 shows a cross section of the relationship between the nip roller 50 and the heating cylinder 541. In this invention, it is necessary to position the nip roller 50 in the region of the initial heating position. However, based on experiments by the inventors, the generation of concentration unevenness can be suppressed when the distance between the initial heating position, which is shown as D in the drawing, and the nip start position is D < 5 mm. Of course, allowing the photosensitive member 8 to contact the nip roller 50 before the heating cylinder 541 is acceptable.

By using the elastic roller as such a photosensitive member pinch means, this simple structure will prevent the concentration unevenness that are caused by the waving of the photosensitive member at the initial heating position of thermal development. In addition, the blurring of the low concentration areas also can be prevented. Moreover, because the time in which the photosensitive member is in contact with the nip roller 50 is short, the temperature of the photosensitive member 8 cannot rise completely while contact is being made. As a consequence, the temperature rise of the nip roller 50 itself is held to a certain set value. In this embodiment, the temperature is 60°C lower than the temperature of the heating cylinder 541. As a result, thermal development is always maintained in a condition that allows it to start after passing the nip roller 50. This allows stable images to be obtained.

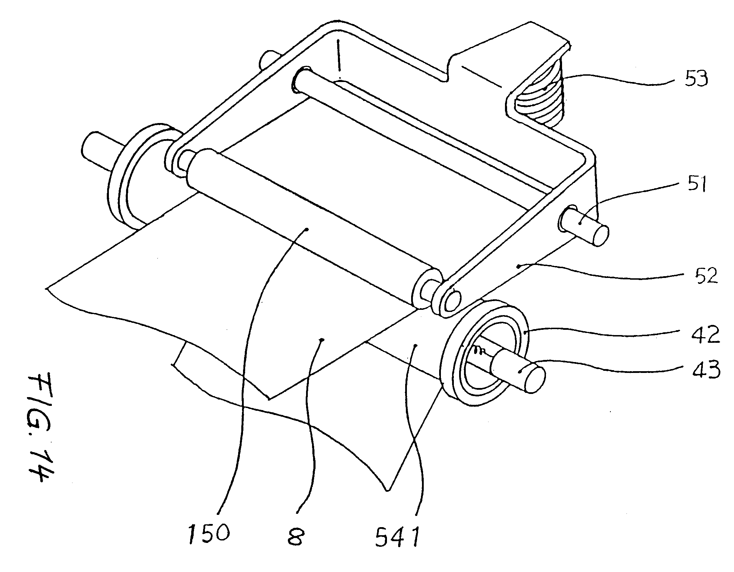

Next, a variation of the third embodiment shown in Fig. 11 will be described using the diagonal drawing shown in Fig. 14. The configuration is basically the same as that shown in Fig. 11. However, the feature of this embodiment is that the nip roller 150 is made of a hard material, such as metal, resin or hardened rubber.

In the case of a hard roller, the roller itself will remain almost unchanged even when the photosensitive member 8 is placed under pressure through the heating cylinder 541. As a result, the peripheral speed at the point of contact between the photosensitive member 8 and the nip roller 150, which rotates by being driven by the travel of the photosensitive member 8, is almost the same as the travel speed of the photosensitive member 8.

When there is a clear existence of relative speed at the contact point between the photosensitive member 8 and the photosensitive member engagement means, the photosensitive member 8 surface with the micro-capsules becomes abraded, sometimes showing scratches in the image. In the case of a photosensitive transfer image forming mechanism that uses the micro-capsules described in this embodiment, when the surface of the photosensitive member is abraded, the micro-capsules will be destroyed. They will be destroyed by contact pressure that is very much smaller than the pressure applied in the vertical direction. In addition, ink will be transferred from areas where the ink is supposed to harden and transfer is not supposed to take place. For example, if the nip roller is fixed in place so that it cannot rotate, fine black lines will appear in the images even if a small amount of surface pressure is applied to the nip roller 150. In addition, even if the nip roller can rotate, the surface of the photosensitive element may be damaged if the roller is deformed due to pressure. The reason for this is that the shape of the roller will change in the cross section direction when placed under pressure. However, during the period beginning with the placement of the photosensitive member 8 in the nip area and until the area of surface pressure has passed and the photosensitive member 8 separates from the nip area, the speed at the surface of the roller will not be constant because the radius of the contact point has changed due to deformation. This happens regardless of the fact that the nip roller 150 rotates at a constant speed.

As a result, a relative speed appears between the surface of the nip roller 150 and the photosensitive member 8. The surface of the photosensitive member 8 is slightly abraded and the micro-capsules are destroyed. There is no concern that this type of problem will arise if the nip roller 150 is composed of a hard roller.

When hard rubber is used on the nip roller 150, there are no scratches on the image from surface abrasion of the photosensitive member 8 as described above. However, if the force on the heating cylinder 541 is too great, the surface pressure will be too high, destroying the micro-capsules and creating blurring in the low concentration areas of the image. Based on the experiments of the inventors, blurring appeared when the nip roller 150 was placed under linear pressure above 100 grams per centimeter. A spring 53 needs to be decided upon so that this range is not exceeded.

Next, the operation of the third embodiment, which already was described above, will be described. This embodiment features a series of operations for the nip roller image formation in particular.

It will be described by once again returning to Fig. 11. In the drawing, a cam 56, which is driven to rotate by a motor (not illustrated) can lift the lever 52 in the direction opposite that in which it is forced by the spring 53. This allows a nip roller 50 configuration that allows separation [from the heating roller].

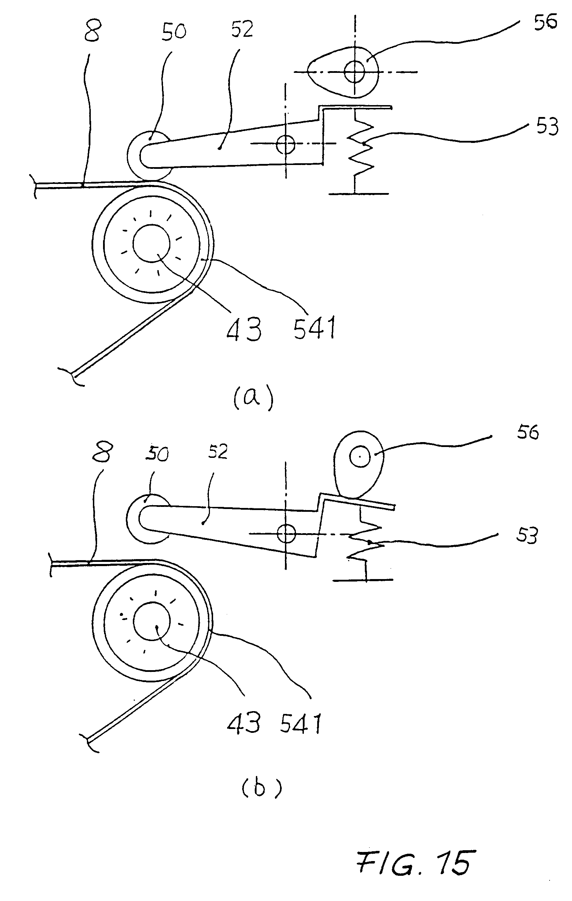

Next, the operation of the nip roller 50 will be described using the cross sectional drawings in Fig. 15. Fig. 15 (a) shows the photosensitive member 8 engaged with the nip roller 50 (engaged condition), and the heating cylinder 541. The cam 56 is in a position where it makes no contact with the lever 52 and the nip roller 50 compression force is generated by the spring 53. Fig. 15 (b) shows the photosensitive member 8 not engaged with the nip roller 50 (released condition) and the heating cylinder 541. The cam 56 overcomes the force of the spring 53 and lifts the lever 52 up. The nip roller 50 does not make contact with the photosensitive member 8.

In this embodiment, when a copy operation starts, the document image begins to be formed as a latent image on the photosensitive member 8. In the standby condition, the nip roller 50, which is in the released condition, enters the engaged condition due to the cam 56 rotating until it gets to the designated position before the image region comes to the heating cylinder 541. When carrying out a copy operation for one image only, the travel of the photosensitive member 8 will continue until the end of the image region has passed the pressure transfer mechanism 60. Thus, the engaged condition will be maintained during that period. A shift to the release condition will come after this. When consecutive copy operations takes place, the engaged condition will continue until the final image region has finished passing the pressure transfer mechanism 60.

By using the photosensitive member engagement means in this manner, the concentration unevenness caused by the waving of the photosensitive member 8 at the thermal development initial heating position can be prevented using a simple configuration. Moreover, during the period the photosensitive member 8 is traveling, the photosensitive member 8 makes contact with nip roller 50 for a short period of time. Therefore, during the time that contact is being made, the temperature of the photosensitive member 8 cannot rise completely. During the period when the photosensitive member 8 is static, the nip roller 50 is in the released condition. Therefore, there is no heat conductance from the heating cylinder 541. As a result, the temperature rise of the nip roller 50 itself is held to a certain set value. In this embodiment, this temperature was 80 °C lower than the temperature of the heating cylinder 541. As a result, for the thermal development reaction, the condition in which the thermal development reaction starts after the nip roller 50 has passed, always is maintained. This allows stable images to be obtained.

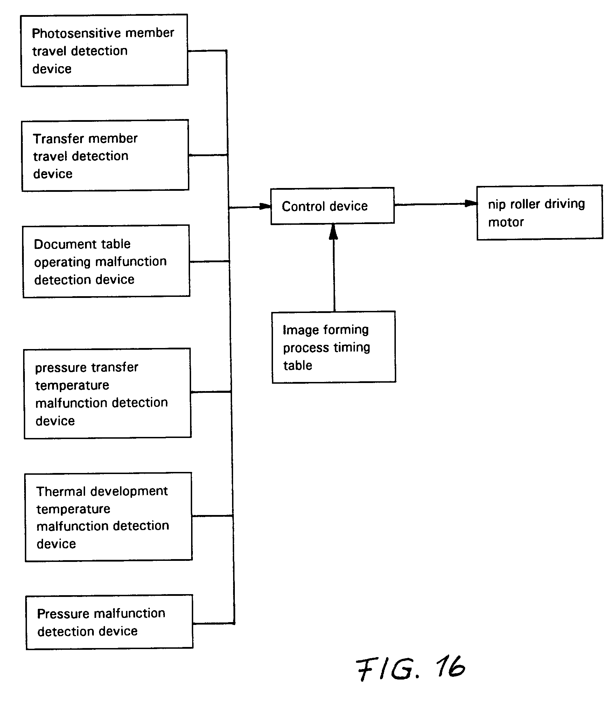

Next, a description of nip roller 50 operations when a malfunction occurs in the image forming step will be described. Fig. 16 is a block diagram of the image forming operation malfunction detection system of the image forming mechanism of this embodiment, which is shown in Fig. 1. Among the malfunction detection sensors are photosensitive member travel detection, transfer member travel detection, document table operating malfunction detection, thermal development temperature malfunction detection, pressure transfer temperature malfunction detection and pressure malfunction detection. A description of each detection operation and the nip roller 50 operation will be given.

The photosensitive member travel detector detects whether or not the photosensitive member is traveling accurately. This is detected by a type of encoder that senses the rotating axis speed of a cartridge 20 by means of a rotating slit disk using an opto-electric sensor. In other words, when the slit window area on the disk comes to the opto-electric sensor, light from a light emitting element will be shut off by the disk and not reach the light sensing element. As a result, when the rotating slit disk rotates, on and off signals from the light sensing element will be output continuously. The travel speed of the photosensitive member 8 will be detected by that frequency. If the detected speed of the photosensitive member 8 exceeds the specified range, normal images cannot be obtained, whether it is due to the photosensitive member 8 being crammed inside of the [image forming] mechanism or due to the cycle being off, etc. The result is that the nip roller 50 is placed in the released condition.

A lever placed in the transfer member travel path is knocked down by the passing of the transfer member 11. The transfer member travel detector detects whether or not the transfer member 11 is in the path by obstructing the light of an optical sensor on one end of the lever. At a specified time during the copy operation, detection takes place to determine if the transfer member 11 has reached the transfer member travel detection position or if it already has passed that position. If the signal differs from the anticipated signal, the nip roller 50 will be placed in the released condition because a problem such as a paper jam might have occurred.

The document table malfunction detector determines if a lever placed in the movement path of the document table 1 has been knocked down. In the same manner as the transfer member travel detector, detection of whether or not the document table exists will take place. At a specified time during the copy operation, detection takes place to determine if the document table 1 has reached the document table detection position or if it already has passed that position. If the signal differs from the anticipated signal, the nip roller 50 will be placed in the released condition because if the correct movement of the document table cannot take place, normal images cannot be obtained.

For the thermal development temperature malfunction detector and the pressure transfer temperature malfunction detector, if the temperatures detected by thermistors, which are able to slide on the heating cylinder 541 and the upper roller 61, have exceeded the specified range, the nip roller 50 will be placed in the released condition because normal images cannot be obtained.

The pressure malfunction detector detects the position of the middle roller of the pressure transfer mechanism that selects either pressure or release by means of a detector that is the same as that for the document table malfunction detector. It detects whether the condition is that of pressure or release. When the transfer member 11 is applied pressure at a time that is not in the pressure section or when the transfer member 11 is not applied pressure at a time that is in the pressure transfer section, the nip roller 50 will be released.

Performing the above malfunction processing operations prevents the nip roller 50 from being left in the engaged condition when the photosensitive member 8 continues to be in the stopped condition. This prevents the nip roller 50 from becoming too hot and influencing the thermal development condition of the next copy operation, prevents contamination on the nip roller 50, or in a severe case, it prevents [the nip roller from] sticking to the photosensitive member 8. In addition, when the photosensitive member 8 is jammed, it allows an easy resolution.

The above operations can be applied in the same manner to Fig. 14, which is a variation of Fig. 11.

In the third embodiment described above, the configuration is such that all heating surfaces receive static friction forces from the photosensitive member 8 travel force and are caused to rotate. However, it has been confirmed that the same effect can be obtained for a configuration that heats while the heating surface is static and the photosensitive member slides across the heating surface. In this case, a total cylindrical shape is not necessarily required. The thermal development device also may have a heating surface that uses part of a circular arc.

This invention can be applied widely to [a broad range of] thermal development photosensitive materials. It is not limited to the photosensitive transfer type thermal development materials described in the embodiments.

In addition, a copier was used as an example in the description of the embodiments. However, [this invention] is not limited to this. It goes without saying that this invention can be applied to [a broad range of] image forming mechanisms, such as printers, facsimile machines and electronic cameras.

Potential Industrial Uses

As described above, the thermal development device of this invention can be used in a broad range of areas as a processing mechanism that uses thermal development photosensitive materials. Among them, it can be applied favorably to image forming mechanisms such as copiers (analog and digital), printers, facsimile machines and electronic cameras.

In particular, the image output with controlled concentration unevenness or controlled paper wrinkles can be obtained in a stable manner by absorbing the thermal transformations of the thermal development photosensitive member. The effect is that a highly reliable image forming mechanism with high quality and a high-level of mass production capability can be obtained and at a low cost.

## Claims

1. A thermal development device that heats a thermal development type photosensitive member that is exposed to an image, wherein the thermal development device is characterized by having a heating surface that has peaks and valleys or curves or linear projections that protrude in a direction that is nearly perpendicular to the axial direction of the heating surface, which is provided in the direction nearly perpendicular to the travel of the photosensitive member.

2. The thermal development device described in claim 1, which is characterized by the aforesaid peaks and valleys being formed periodically within the image region.

3. The thermal development device described in claim 1, which is characterized by the aforesaid peaks and valleys being smooth within the image forming region and formed as projections on the heating surface on the outside of the image forming region.

4. The thermal development device described in claim 1, which is characterized by the aforesaid curved heating surface having a crown shape and by having a correction roller with a reverse-crown shape.

5. The thermal development device described in claim 1, which is characterized by the aforesaid projections being formed in a spiral shape.

6. The thermal development device described in claim 5, which is characterized by the aforesaid projections being formed so that they expand in the direction of photosensitive member travel.

7. The thermal development device described in claim 5, which is characterized by a rotating heating surface and the heating surface periphery speed being faster than the photosensitive member travel speed.

8. A thermal development device that has a heating section that heats by making contact chiefly with the part of the thermal development photosensitive member that is exposed to images, wherein the thermal development device is characterized by having a photosensitive member engagement means that engages the aforesaid photosensitive member between the aforesaid heating section in the region of the initial heating position.

9. The thermal development device described in claim 8, which is characterized by the aforesaid photosensitive member engagement means being an elastic roller.

10. The thermal development device described in claim 9, which is characterized by the aforesaid photosensitive member engagement means putting pressure on the aforesaid heating section such that the maximum surface pressure is less than 5 kilograms per square centimeter.

11. The thermal development device described in claim 8, which is characterized by having a photosensitive member engagement means that engages the aforesaid photosensitive member at a relative speed of zero between the heating sections.

12. The thermal development device described in claim 11, which is characterized by the aforesaid photosensitive member engagement means being a hard roller.

13. The thermal development device described in claim 8, which is characterized by having a photosensitive member engagement means that engages the aforesaid photosensitive member in a time-selective manner between the heating sections in the initial heating position region.

14. The thermal development device described in claim 13, which is characterized by the aforesaid photosensitive member engagement means not engaging the aforesaid photosensitive member when the photosensitive member is not developing [images].

15. The thermal development device described in claim 13, which is characterized by the aforesaid photosensitive member engagement means not engaging the photosensitive member when the operation of the image forming step is detected as a malfunction by at least one of the detection mechanisms that detect the operation of the designated image forming step.

FIG. 1

FIG. 2

FIG. 3

FIG. 4

( a )

( b )

241

FIG.5

FIG. 6

FIG. 7

FIG. 8

FIG. 9

48

49

FIG. 10

FIG. 11

FIG. 12

FIG. 13

FIG. 14

(a)

(b)

FIG. 15

Photosensitive member
travel detection
device

Transfer member
travel detection
device

Document table
operating malfunction
detection device

Control device → nip roller driving
motor

Image forming
process timing
table

pressure transfer
temperature
malfunction detection
device

Thermal development
temperature
malfunction detection
device

Pressure malfunction
detection device

*FIG. 16*

# INTERNATIONAL SEARCH REPORT

International Application No   PCT/JP92/00767

## I. CLASSIFICATION OF SUBJECT MATTER (if several classification symbols apply, indicate all) 6

According to International Patent Classification (IPC) or to both National Classification and IPC

Int. Cl$^5$   G03D13/00

## II. FIELDS SEARCHED

| Minimum Documentation Searched 7 | |
|---|---|
| Classification System | Classification Symbols |
| IPC | G03D13/00, G03G15/20 |

| Documentation Searched other than Minimum Documentation to the Extent that such Documents are Included in the Fields Searched 8 | |
|---|---|
| Jitsuyo Shinan Koho | 1900 – 1992 |
| Kokai Jitsuyo Shinan Koho | 1971 – 1992 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 59-75247 (Fuji Photo Film Co., Ltd.), April 27, 1984 (27. 04. 84), upper right column to lower left column, page 5 & US, A, 4620096 & EP, A3, 109537 | 1-15 |
| Y | JP, U, 59-114580 (Fuji Xerox Co., Ltd.), August 2, 1984 (02. 08. 84), (Family: none) | 1-2 |
| Y | JP, B2, 57-29372 (Ricoh Co., Ltd.), June 22, 1982 (22. 06. 82), lines 28 to 44, column 3, (Family: none) | 3, 4 |
| Y | JP, U, 63-200859 (Minolta Camera Co., Ltd.), December 23, 1988 (23. 12. 88), (Family: none) | 5-6 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 15, 1992 (15. 07. 92) | August 4, 1992 (04. 08. 92) |
| International Searching Authority | Signature of Authorized Officer |
| Japanese Patent Office | |

Form PCT/ISA/210 (second sheet) (January 1985)